# EUROPEAN PATENT APPLICATION

(11) **EP 3 320 787 A1**
(43) Date of publication of application: **16.05.2018**
(21) Application number: 16821638.0
(22) Date of filing: 06.07.2016
(51) Int. Cl.: A23N 7/02, A23N 7/10

(54) **MACHINE FOR PEELING BULBS AND TUBERS AND PEELING BLADE MEMBER APPLIED TO MACHINE FOR PEELING BULBS AND TUBERS**

(30) Priority: 07.07.2015 KR 20150096288
(71) Applicant: Jang, Heoi Sik, Gyeonggi-do 18596 (KR)
(72) Inventor: Jang, Heoi Sik, Gyeonggi-do 18596 (KR)
(74) Representative: Van Breda, Jacobus
(86) International application number: PCT/KR2016/007304
(87) International publication number: WO 2017/007232

(57) **Abstract**

Disclosed are a machine for peeling bulbs and tubers and a peeling blade member applied to the machine for peeling bulbs and tubers. The disclosed machine for peeling bulbs and tubers includes a case, a bulb plant accommodating member, a bulb plant accommodating driving member, a peeling blade member, and a peeling blade driving member. According to the disclosed machine for peeling bulbs and tubers and the disclosed peeling blade member applied to the machine for peeling bulbs and tubers, occurrence of bruises and scratches of bulbs and tubers may be minimized, and a time consumed for peeling the bulbs and tubers may be shortened.

## Description

### [Technical Field]

The present invention relates to a machine for peeling bulbs and tubers and a peeling blade member applied to the machine for peeling bulbs and tubers.

### [Background Art]

Bulbs and tubers refer to plants having bulbs, which include potatoes, sweet potatoes, and the like. Because such bulbs and tubers are dug up from the ground, it is necessary to wash and peel the bulbs and tubers for use as food.

In this way, a device for peeling bulbs and tubers corresponds to a machine for peeling bulbs and tubers. Examples of a machine for peeling bulbs and tubers according to the related art correspond to patent documents including Korean Patent No. 10-0905389 (Registration Date: 2009.06.23, Title of Invention: Peeler), Korean Patent Application Publication No. 10-2011-0025292 (Application Publication Date: 2011.03.10, Title of Invention: Cutting module and peeler using same), Korean Patent No. 10-1168689 (Registration Date: 2012.07.19, Title of Invention: Structure for opening/closing outlet of peeling machine), and the like.

However, in the related art, as in Korean Patent No. 10-0905389, because bulbs and tubers are accommodated in one large container and a rotary blade for peeling is applied to the bottom surface of the container, the bulbs and tubers rising while being peeled by the rotary blade rise in the container for an unnecessarily long time. Accordingly, the bulbs and tubers are bruised while falling, and a long time is consumed for peeling the bulbs and tubers as well.

Further, in the related art, as in Korean Patent Application Publication No. 10-2011-0025292, in a peeling blade member applied to a machine for peeling bulbs and tubers, a raised spot is formed on the rear side of a blade such that bulbs and tubers cut by the blade rise to the air. In this case, as a sharp part of the raised spot is stuck into the bulbs and tubers which rise and then fall, the bulbs and tubers are damaged or bruised.

Further, in the related art, as in Korean Patent No. 10-1168689, separate outlet opening/closing structures such as a door configured to open/close an outlet and a door opening/closing motor configured to provide a driving force for opening/closing the door are required to separate the completely peeled bulbs and tubers from a peeling machine while the bulbs and tubers being peeled are prevented from being separated from the peeling machine. This makes the peeling machine complex and is the cause of failure.

### [Disclosure]

### [Technical Problem]

An aspect of the present invention is to provide a machine for peeling bulbs and tubers, which may minimize occurrence of bruises and scratches of bulbs and tubers and may shorten a time consumed for peeling the bulbs and tubers, and a peeling blade member applied to the machine for peeling bulbs and tubers.

Another aspect of the present invention is to provide a machine for peeling bulbs and tubers, which may be operated even without a separate outlet opening/closing structure and a peeling blade member applied to the machine for peeling bulbs and tubers.

### [Technical Solution]

A machine for peeling bulbs and tubers according to an aspect includes a case, a bulb plant accommodating member which is arranged inside the case and in which bulbs and tubers to be peeled are accommodated, a bulb plant accommodating driving member configured to rotate the bulb plant accommodating member, a peeling blade member configured to peel the bulbs and tubers accommodated in the bulb plant accommodating member, and a peeling blade driving member configured to drive the peeling blade member to peel the bulbs and tubers.

The bulb plant accommodating member is divided into a plurality of independent accommodating holes. As the bulb plant accommodating member is rotated by the bulb plant accommodating driving member in a state in which the bulbs and tubers are divided and accommodated in the accommodating holes, the bulbs and tubers accommodated in the accommodating holes are independently peeled.

The bulb plant accommodating member includes, a connection panel connected to a rotary shaft of the bulb plant accommodating driving member, an inner diaphragm having a hollow cylindrical shape such that a central axis of the inner diaphragm is placed on an extension line of the rotary shaft of the bulb plant accommodating driving member, a plurality of compartment diaphragms radially extending from the inner diaphragm, and a plurality of upper diaphragms covering upper portions of a plurality of accommodating holes defined by an inner wall of the case, the inner diaphragm, and the compartment diaphragms.

### [Advantageous Effects]

According to a machine for peeling bulbs and tubers and a peeling blade member applied to the machine for peeling bulbs and tubers according to an aspect of the present invention, a bulb plant accommodating member is divided into a plurality of independent accommodating holes. As the bulb plant accommodating member is rotated by a bulb plant accommodating driving member in a state in which the bulbs and tubers are divided and accommodated in the accommodating holes, the bulbs and tubers accommodated in the accommodating holes are independently peeled. Thus, because the bulbs and tubers stay not in the entire inside of a case but in the accommodating holes, a staying time and a staying height of the bulbs and tubers are limited within predetermined ranges, so that occurrence of bruises or scratches of the bulbs and tubers may be minimized, and a time consumed for peeling the bulbs and tubers may be shortened as well. Further, since only bulbs and tubers in accommodating holes facing a bulb plant discharge port among the accommodating holes may be automatically discharged to the outside by a centrifugal force while the bulbs and tubers are peeled in the closed accommodating holes, the machine may be operated even without a separate discharge opening/closing structure.

According to a machine for peeling bulbs and tubers and a peeling blade member applied to the machine for peeling bulbs and tubers according to another aspect of the present invention, even while bulbs and tubers peeled by blades may move along a downward inclined surface, may move along an upward inclined surface, and may then be raised to the upper side of the peeling blade member smoothly, there is no protrusion on the surface of the peeling blade member, so that a phenomenon may be prevented in which the bulbs and tubers are bruised or scratched while moving upward and then moving downward.

### [Description of Drawings]

FIG. 1 is a view illustrating a machine for peeling bulbs and tubers according to an embodiment of the present invention, when viewed from the front side.
FIG. 2 is a view illustrating the machine for peeling bulbs and tubers according to the embodiment of the present invention, when viewed from the above.
FIG. 3 is a view illustrating an inside of the machine for peeling bulbs and tubers according to the embodiment of the present invention.
FIG. 4 is a view illustrating a state in which some components of the machine for peeling bulbs and tubers according to the embodiment of the present invention are coupled to each other.
FIG. 5 is a view illustrating a state in which an upper diaphragm of FIG. 4 is raised.
FIG. 6 is a view illustrating some components of the machine for peeling bulbs and tubers according to the embodiment of the present invention, when viewed from the above.
FIG. 7 is a view illustrating a peeling blade member applied to the machine for peeling bulbs and tubers according to the embodiment of the present invention, when viewed from the above.
FIG. 8 is an enlarged view illustrating a bulb plant raising portion in the peeling blade member applied to the machine for peeling bulbs and tubers according to the embodiment of the present invention.
FIG. 9 is an enlarged view illustrating a state in which a blade is separated from the peeling blade member applied to the machine for peeling bulbs and tubers according to the embodiment of the present invention.

### [Modes of the Invention]

Hereinafter, a machine for peeling bulbs and tubers and a peeling blade member applied to the machine for peeling bulbs and tubers according to an embodiment of the present invention will be described with reference to the accompanying drawings.

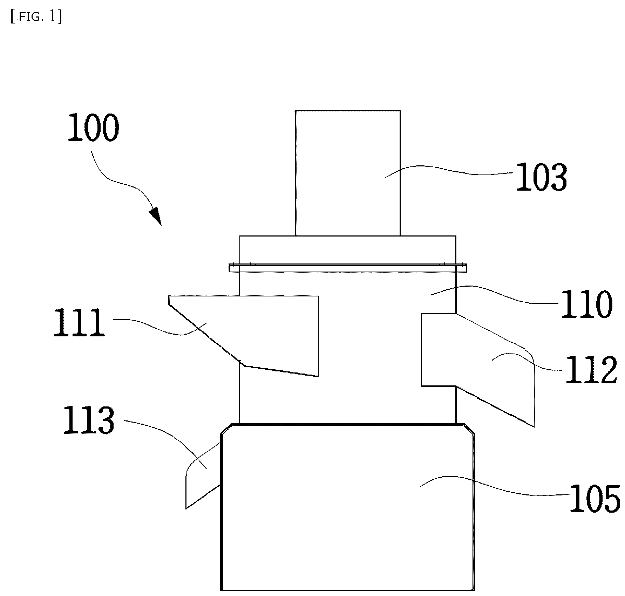

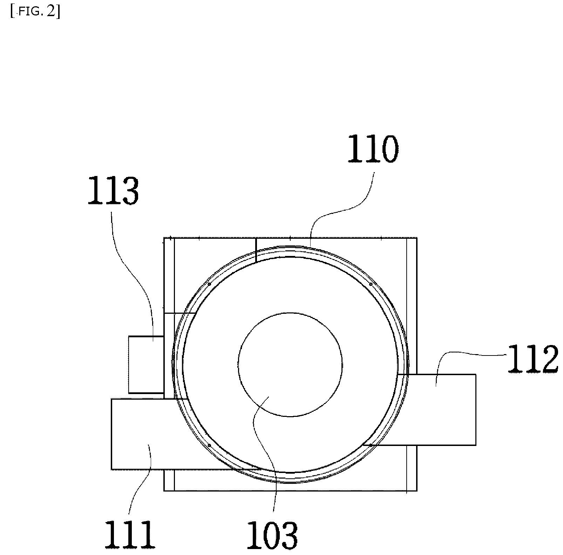

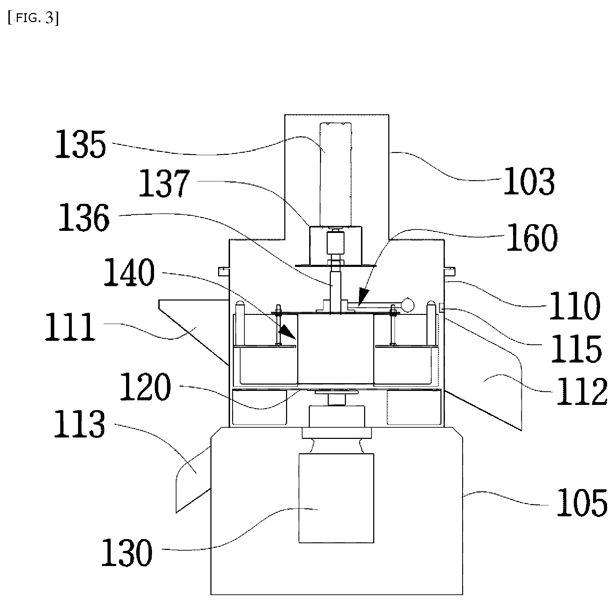

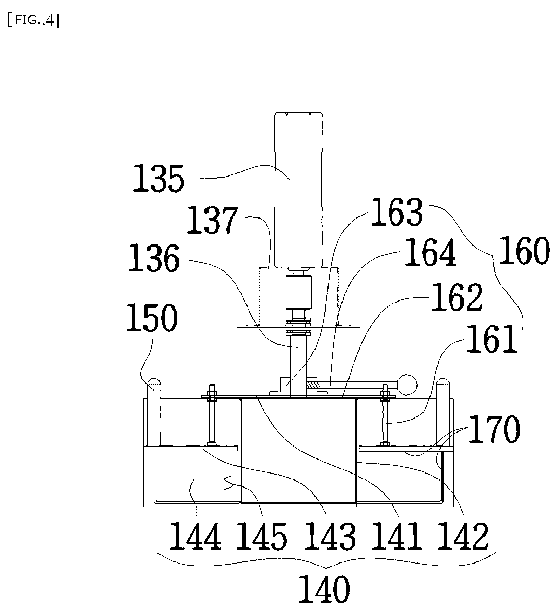

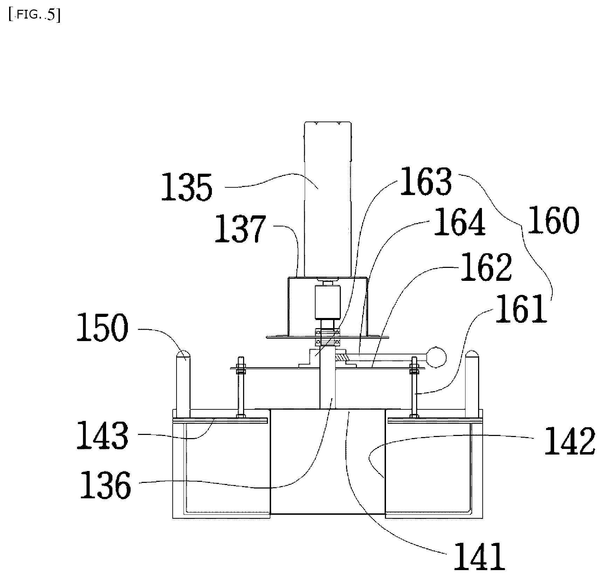

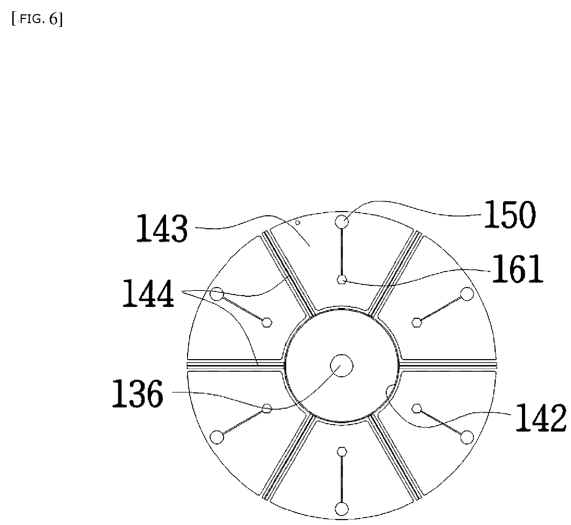

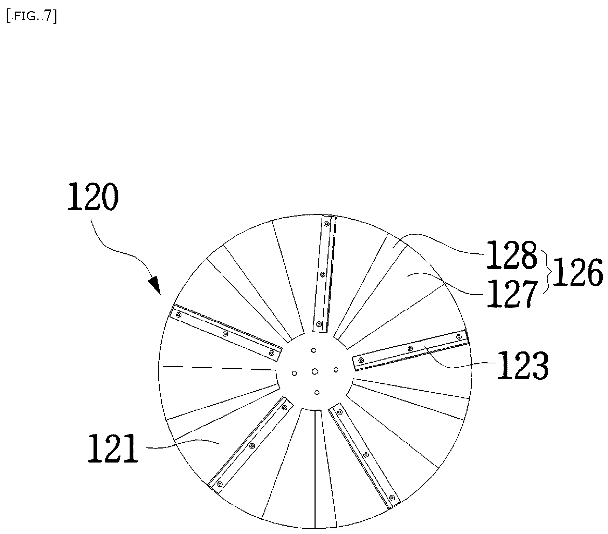

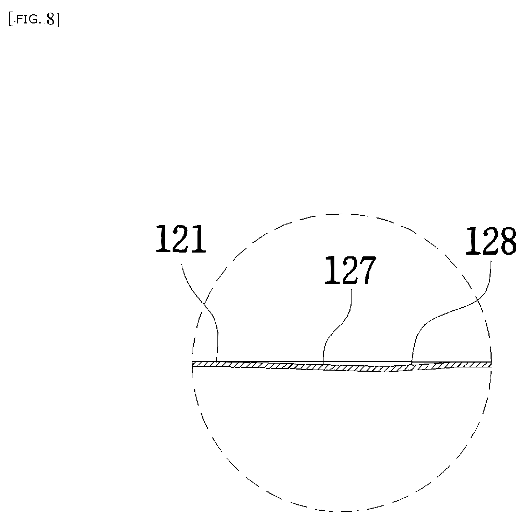

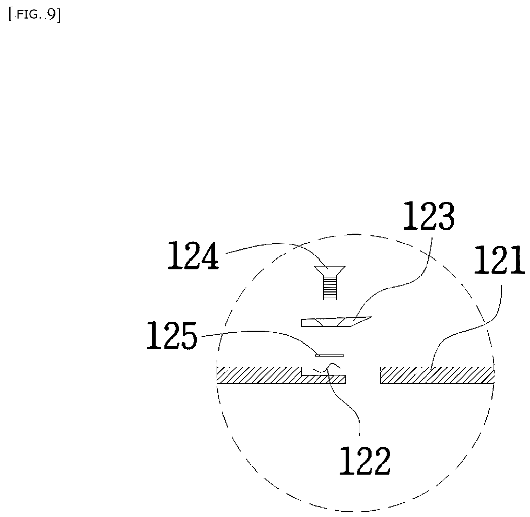

FIG. 1 is a view illustrating a machine for peeling bulbs and tubers according to an embodiment of the present invention, when viewed from the front side, FIG. 2 is a view illustrating the machine for peeling bulbs and tubers according to the embodiment of the present invention, when viewed from the above, FIG. 3 is a view illustrating an inside of the machine for peeling bulbs and tubers according to the embodiment of the present invention, FIG. 4 is a view illustrating a state in which some components of the machine for peeling bulbs and tubers according to the embodiment of the present invention are coupled to each other, FIG. 5 is a view illustrating a state in which an upper diaphragm of FIG. 4 is raised, FIG. 6 is a view illustrating some components of the machine for peeling bulbs and tubers according to the embodiment of the present invention when viewed from the above, FIG. 7 is a view illustrating a peeling blade member applied to the machine for peeling bulbs and tubers according to the embodiment of the present invention when viewed from the above, FIG. 8 is an enlarged view illustrating a bulb plant raising portion in the peeling blade member applied to the machine for peeling bulbs and tubers according to the embodiment of the present invention, and FIG. 9 is an enlarged view illustrating a state in which a blade is separated from the peeling blade member applied to the machine for peeling bulbs and tubers according to the embodiment of the present invention.

Referring to FIGS. 1 to 9, a machine 100 for peeling bulbs and tubers according to the present embodiment includes cases 103, 105, and 110, a bulb plant accommodating member 140, a bulb plant accommodating driving member 135, a peeling blade member 120, and a peeling blade driving member 130, in which the bulb plant accommodating member 140 is divided into a plurality of independent accommodating holes 145, and as the bulb plant accommodating member 140 is rotated by the bulb plant accommodating driving member 135 in a state in which bulbs and tubers are divided and accommodated in the accommodating holes 145, the bulbs and tubers accommodated in the accommodating holes 145 may be independently peeled.

The bulb plant accommodating member 140, the bulb plant accommodating driving member 135, the peeling blade member 120, and the peeling blade driving member 130 are accommodated in the cases 103, 105, and 110.

In the present embodiment, illustratively, the cases 103, 105, and 110 include a central body 110 in which the bulb plant accommodating member 140 is accommodated, a lower body 105 which is arranged below the central body 110 and in which the peeling blade driving member 130 is accommodated, and an upper body 103 which covers an upper portion of the central body 110 and in which the bulb plant accommodating driving member 135 is accommodated.

Reference numeral 111 refers to a bulb plant supply port through which the bulbs and tubers to be peeled are supplied to the bulb plant accommodating member 140, reference numeral 112 refers to a bulb plant discharge port through which the completely peeled bulbs and tubers are discharged from the bulb plant accommodating member 140 to the outside, and reference numeral 113 refers to a peel discharge port through which peels peeled from the bulbs and tubers are discharged from the bulb plant accommodating member 140 to the outside.

The bulb plant accommodating member 140 is arranged in the cases 103, 105, and 110, and the bulbs and tubers to be peeled are accommodated in the bulb plant accommodating member 140. The bulb plant accommodating driving member 135 may rotate the bulb plant accommodating member 140 by an electric motor or the like.

Reference numeral 136 refers to a rotary shaft of the bulb plant accommodating driving member 135, and reference numeral 137 refers to a fixing frame configured to fix the bulb plant accommodating driving member 135 to the cases 103, 105, and 110, here, the central body 110.

The bulb plant accommodating member 140 includes a connection panel 141 connected to the rotary shaft 136 of the bulb plant accommodating driving member 135, an inner diaphragm 142 having a hollow cylindrical shape such that a central axis thereof is placed on an extension line of the rotary shaft 136 of the bulb plant accommodating driving member 135, a plurality of compartment diaphragms 144 radially extending from the inner diaphragm 142, and a plurality of upper diaphragms 143 covering upper portions of the plurality of accommodating holes 145 defined by inner walls of the cases 103, 105, and 110, the inner diaphragm 142, and the compartment diaphragms 144.

In detail, the connection panel 141 has a disc shape having a predetermined thickness such that a central axis thereof is connected to the rotary shaft 136 of the bulb plant accommodating driving member 135, the inner diaphragm 142 has a hollow cylindrical shape such that the inner diaphragm 142 is coupled to a lower portion of the connection panel 141 while a central axis thereof coincides with the central axis of the connection panel 141, and the compartment diaphragms 144 radially extend from the outer surface of the inner diaphragm 142 around the central axis of the inner diaphragm 142 at regular intervals. Then, the plurality of independent accommodating holes 145 are defined between the compartment diaphragms 144 by the inner walls of the cases 103, 105, and 110, here, the central body 110, the inner diaphragm 142, and the compartment diaphragms 144.

The machine 100 for peeling bulbs and tubers may further include an upper diaphragm elevating member 160 which may elevate the upper diaphragms 143 inside the accommodating holes 145.

The upper diaphragm elevating member 160 includes a plurality of extension bodies 161 extending from the upper diaphragms 143, respectively, an extension coupling body 162 to which the extension bodies 161 are coupled, a rotary shaft penetrator 163 coupled to the extension coupling body 162 while the rotary shaft 136 of the bulb plant accommodating driving member 135 passes therethrough, and a penetrator fixing body 164 configured to fix a position of the rotary shaft penetrator 163 on the rotary shaft 136 of the bulb plant accommodating driving member 135.

In detail, each of the extension bodies 161 may have a rod shape vertically extending from the corresponding upper diaphragm 143, the extension coupling body 162 may have a disc shape in which a central axis thereof coincides with the rotary shaft 136 of the bulb plant accommodating driving member 135 while the extension bodies 161 are connected to each other along an outer circumference of the extension coupling body 162, and the rotary shaft penetrator 163 may be elevated along the rotary shaft 136 of the bulb plant accommodating driving member 135 in a state in which the rotary shaft 136 of the bulb plant accommodating driving member 135 passes therethrough and the extension coupling body 162 is coupled thereto.

A screw thread is formed at a head portion of the penetrator fixing body 164, a through-hole through which the head portion of the penetrator fixing body 164 may pass is formed on a side surface of the rotary shaft penetrator 163, and a screw thread which may be engaged with the screw thread formed in the penetrator fixing body 164 is formed on an inner surface of the through-hole. Then, a user grips and rotates an outer distal end of the penetrator fixing body 164 with hands in one direction, so that the penetrator fixing body 164 comes into contact with the surface of the rotary shaft 136 of the bulb plant accommodating driving member 135, and accordingly, the penetrator fixing body 164 may fix the position of the rotary shaft penetrator 163 in the rotary shaft 136 of the bulb plant accommodating driving member 135. Further, the user grips and rotates the outer distal end of the penetrator fixing body 164 with hands in the other direction, so that the penetrator fixing body 164 is spaced apart from the surface of the rotary shaft 136 of the bulb plant accommodating driving member 135. Accordingly, the penetrator fixing body 164 unfixes the position of the rotary shaft penetrator 163 in the rotary shaft 136 of the bulb plant accommodating driving member 135, and thus, the upper diaphragm elevating member 160 and the upper diaphragms 143 may be elevated on the rotary shaft 136.

In the above-configured machine 100 for peeling bulbs and tubers, the bulb plant accommodating member 140 is divided into the plurality of independent accommodating holes 145. As the bulb plant accommodating member 140 is rotated by the bulb plant accommodating driving member 135 in a state in which the bulbs and tubers are divided and accommodated in the accommodating holes 145, the bulbs and tubers accommodated in the accommodating holes 145 may be independently peeled. Thus, because the bulbs and tubers stay not in the entire insides of the cases 103, 105, and 110 but in the accommodating holes 145, a staying time and a staying height of the bulbs and tubers are limited within predetermined ranges, so that occurrence of bruises or scratches of the bulbs and tubers may be minimized and a time consumed for peeling the bulbs and tubers may be shortened as well. Further, because only bulbs and tubers existing in accommodating holes 145 facing the bulb plant discharge port 112 among the accommodating holes 145 are automatically discharged to the outside by a centrifugal force while the bulbs and tubers are peeled in the closed accommodating holes 145, the machine 100 for peeling bulbs and tubers may be operated even without a separate discharge port opening/closing structure.

In the present embodiment, shock absorbing members 170, which may absorb collision shocks of the bulbs and tubers while the bulbs and tubers are peeled, are arranged on inner surfaces of the cases 103, 105, and 110, particularly, the central body 110, and the bulb plant accommodating member 140.

In detail, the shock absorbing members 170 such as urethane foam are attached to the inner wall of the central body 110, the inner diaphragm 142, the compartment diaphragms 144, and the upper diaphragms 143, which are wall surfaces which the bulbs and tubers may come into contact with in the bulb plant accommodating member 140. Then, a phenomenon may be prevented in which the bulbs and tubers collide with the above-mentioned wall surfaces while being peeled, and are thus being bruised or scratched.

The peeling blade member 120 peels the bulbs and tubers accommodated in the bulb plant accommodating member 140, and the peeling blade driving member 130 drives the peeling blade member 120 to peel the bulbs and tubers.

The peeling blade member 120 includes a peeling blade body 121 formed to have a rotatable disc shape, blades 123 formed in the peeling blade body 121 to peel the bulbs and tubers, and bulb plant raising portions 126 configured to raise the bulbs and tubers peeled by the blades 123 in the peeling blade body 121.

The plurality of blades 123 may be radially arranged on the upper surface of the peeling blade body 121 with respect to a central axis of the peeling blade body 121. Blade installation grooves 122 recessed at a certain depth such that the blades 123 may be installed therein are formed in the peeling blade body 121. Some of the blade installation grooves 122 pass through the peeling blade body 121, so that peels peeled by the blades 123 may fall downward of the peeling blade member 120 through the passed part.

The peeling blade member 120 includes height varying bodies 125 arranged between the peeling blade body 121 and the blades 123 to vary relative heights of the blades 123 with respect to the peeling blade body 121.

The height varying bodies 125 are formed to have a plate shape having a predetermined thickness, and may be placed between the blades 123 and the blade installation grooves 122 to vary the heights of the blades 123.

Reference numeral 124 refers to coupling means such as a bolt, which may pass through the blades 123 and the height varying bodies 125 together to be coupled to the blade installation grooves 122.

The bulb plant raising portions 126 include downward inclined surfaces 127 gradually downward inclined from the surface of the peeling blade body 121, and upward inclined surfaces 128 gradually upward inclined toward the surface of the peeling blade body 121, so that the bulbs and tubers peeled through the blades 123 may move downward along the downward inclined surfaces 127, may move upward along the upward inclined surfaces 128, and may be then raised to the upper side of the peeling blade body 121.

The surface of the peeling blade body 121 and the downward inclined surfaces 127 are formed smoothly with respect to each other without a protrusion, the downward inclined surfaces 127 and the upward inclined surfaces 128 are also formed smoothly with respect to each other without a protrusion, and the upward inclined surfaces 128 and the surface of the peeling blade body 121 are also formed smoothly with respect to each other without a protrusion.

The downward inclined surfaces 127 and the upward inclined surfaces 128 are formed radially with respect to a central axis of the peeling blade body 121, and the plurality of downward inclined surfaces 127 and the plurality of upward inclined surfaces 128 are formed on the peeling blade body 121.

The downward inclined surfaces 127 may be formed to have a relatively larger width than that of the upward inclined surfaces 128.

The bulb plant raising portions 126 are arranged on the rear side of the blades 123 with respect to a rotational direction of the peeling blade member 120.

According to the above-described configuration, even while the bulbs and tubers peeled by the blades 123 may move downward along the downward inclined surfaces 127, may move upward along the upward inclined surfaces 128, and may then be raised to the upper side of the peeling blade member 120 smoothly, there is no protrusion on the surface of the peeling blade member 120, so that a phenomenon may be prevented in which the bulbs and tubers are bruised or scratched while moving upward and then moving downward.

The machine 100 for peeling bulbs and tubers includes a rotation amount detecting sensor member 115 configured to detect a rotation amount of the bulb plant accommodating member 140.

To-be-detected objects 150 protrude upward from the upper diaphragms 143, and the rotation amount detecting sensor member 115 is installed on the inner wall of the cases 103, 105, and 110, here, the central body 110, to detect the to-be-detected objects 150 in various schemes such as an infrared ray detecting scheme.

When it is detected by the rotation amount detecting sensor member 115 that the to-be-detected object 150 approaches and the bulb plant accommodating member 140 is thus rotated by a specific amount, the bulb plant accommodating driving member 135 stops rotation of the bulb plant accommodating member 140 for a predetermined period of time. Then, the bulbs and tubers accommodated in the accommodating holes 145 are intensively peeled by the peeling blade member 120 being rotated for a time for which the rotation is stopped. When a predetermined rotation stop time elapses, the bulb plant accommodating driving member 135 is driven and the bulb plant accommodating member 140 is rotated again, so that the above-described operation is repeated.

The bulbs and tubers accommodated in the accommodating holes 145 of the bulb plant accommodating member 140 are supplied to the accommodating holes 145 through the bulb plant support port 111, are rotated according to rotation of the bulb plant accommodating member 140, are peeled by the peeling blade member 120, and are then discharged to the outside through the bulb plant discharge port 112 formed to be adjacent to the bulb plant support port 111 by a centrifugal force.

Hereinafter, an operation of the machine 100 for peeling bulbs and tubers will be described.

First, when the bulbs and tubers to be peeled are supplied through the bulb plant supply portion, the above-supplied bulbs and tubers are accommodated in the accommodating holes 145 facing the bulb plant support port 111 among the accommodating holes 145.

In this state, when the bulb plant accommodating driving member 135 is driven, while the bulb plant accommodating member 140 is rotated, the accommodating holes 145 to which the bulbs and tubers are supplied are closed while being isolated from the bulb plant support port 111.

Because the peeling blade member 120 is consistently being rotated, the bulbs and tubers accommodated in the accommodating holes 145 are peeled while repeatedly moving upward and downward inside the accommodating holes 145.

Meanwhile, when it is detected by the rotation amount detecting sensor member 115 that the to-be-detected object 150 approaches and the bulb plant accommodating member 140 is thus rotated by a specific amount, the bulb plant accommodating driving member 135 stops rotation of the bulb plant accommodating member 140 for a predetermined period of time. Then, the bulbs and tubers accommodated in the accommodating holes 145 are intensively peeled by the peeling blade member 120 being rotated for a time for which the rotation is stopped. When a predetermined rotation stop time elapses, the bulb plant accommodating driving member 135 is driven again, so that the bulb plant accommodating member 140 is rotated again.

The above-described process is continuously performed in the accommodating holes 145. That is, when the bulbs and tubers are supplied to one accommodating hole 145, and the bulb plant accommodating member 140 is then rotated, the bulbs and tubers are supplied to an accommodating hole 145 next to the accommodating hole 145 to which the bulbs and tubers are supplied in turn. Further, even while the bulb plant accommodating member 140 is stopped and re-rotated several times, the peeling blade member 120 is consistently rotated to peel the bulbs and tubers.

After the above-described process is completed, the accommodating holes 145 face the bulb plant discharge port 112, so that the bulbs and tubers completely peeled by a rotational centrifugal force of the bulb plant accommodating member 140 may be discharged to the outside through the bulb plant discharge port 112.

Although specific embodiments of the present invention have been illustrated and described above, it can be identified that the present invention may be modified and changed by those skilled in the art without departing from the spirit and the range of the present invention described in the appended claims. However, it is clearly noted that all the modifications and changes are included in the range of the present invention.

### [Industrial Applicability]

According to a machine for peeling bulbs and tubers and a peeling blade member applied to the machine for peeling bulbs and tubers according to an aspect of the present invention, occurrence of bruises and scratches of bulbs and tubers may be minimized, a time consumed for peeling the bulbs and tubers may be shortened, and the machine may be operated even without a separate discharge port opening/closing structure. Accordingly, industrial applicability is high.

## Claims

1. A machine for peeling bulbs and tubers, the machine comprising:
a case;
a bulb plant accommodating member which is arranged inside the case and in which bulbs and tubers to be peeled are accommodated;
a bulb plant accommodating driving member configured to rotate the bulb plant accommodating member;
a peeling blade member configured to peel the bulbs and tubers accommodated in the bulb plant accommodating member; and
a peeling blade driving member configured to drive the peeling blade member to peel the bulbs and tubers,
wherein the bulb plant accommodating member is divided into a plurality of independent accommodating holes, and
as the bulb plant accommodating member is rotated by the bulb plant accommodating driving member in a state in which bulbs and tubers are divided and accommodated in the accommodating holes, and
the bulbs and tubers accommodated in the accommodating holes may be independently peeled,
wherein the bulb plant accommodating member includes,
a connection panel connected to a rotary shaft of the bulb plant accommodating driving member,
an inner diaphragm having a hollow cylindrical shape such that a central axis of the inner diaphragm is placed on an extension line of the rotary shaft of the bulb plant accommodating driving member,
a plurality of compartment diaphragms radially extending from the inner diaphragm, and
a plurality of upper diaphragms covering upper portions of a plurality of accommodating holes defined by an inner wall of the case, the inner diaphragm, and the compartment diaphragms.

2. The machine of claim 1, wherein the machine for peeling bulbs and tubers includes an upper diaphragm elevating member configured to elevate the upper diaphragms inside the accommodating holes.

3. The machine of claim 2, wherein the upper diaphragm elevating member includes,
a plurality of extension bodies extending from the upper diaphragms, respectively,
an extension coupling body to which the extension bodies are coupled,
a rotary shaft penetrator coupled to the extension coupling body while a rotary shaft of the bulb plant accommodating driving member passes through the rotary shaft penetrator, and
a penetrator fixing body configured to fix a position of the rotary shaft penetrator on the rotary shaft of the bulb plant accommodating driving member,
wherein when the penetrator fixing body unfixes the position of the rotary shaft penetrator, the upper diaphragm elevating member and the upper diaphragms are elevated on the rotary shaft.

4. The machine of claim 1, wherein the machine for peeling bulbs and tubers includes:
a rotation amount detecting sensor member configured to detect a rotation amount of the bulb plant accommodating member,
wherein when it is detected by the rotation amount detecting sensor member that the bulb plant accommodating member is rotated by a specific amount, the bulb plant accommodating driving member stops rotation of the bulb plant accommodating member for a predetermined period of time.

5. The machine of claim 1, wherein the machine for peeling bulbs and tubers includes:
a bulb plant supply port through which the bulbs and tubers to be peeled are supplied to the bulb plant accommodating member; and
a bulb plant discharge port through which the completely peeled bulbs and tubers are discharged from the bulb plant accommodating member,
wherein the bulbs and tubers accommodated in the accommodating holes of the bulb plant accommodating member are supplied to the accommodating holes through the bulb plant supply port, are peeled by the peeling blade member while being rotated according to rotation of the bulb plant accommodating member, and are then discharged to the outside through the bulb plant discharge port formed to be adjacent to the bulb plant supply port by a centrifugal force.

6. The machine of claim 1, wherein shock absorbing members configured to absorb collision shocks of the bulbs and tubers are arranged on inner surfaces of the case and the bulb plant accommodating member.

7. The machine of claim 1, wherein the peeling blade member includes,
a peeling blade body formed to have a rotatable disc shape,
blades formed in the peeling blade body to peel the bulbs and tubers, and bulb plant raising portions configured to raise the bulbs and tubers peeled through the blades in the peeling blade body,
wherein each of the bulb plant raising portions includes,
a downward inclined surface gradually downward inclined from a surface of the peeling blade body, and
an upward inclined surface gradually upward inclined toward the surface of the peeling blade body while being connected to the downward inclined surface, and
wherein the bulbs and tubers peeled through the blades move downward along the downward inclined surface, move upward along the upward inclined surface, and are then raised to an upper side of the peeling blade body.

8. The machine of claim 7, wherein the downward inclined surface and the upward inclined surface are formed radially with respect to a central axis of the peeling blade body.

9. The machine of claim 7, wherein the downward inclined surface is formed to have a relatively larger width than the upward inclined surface.

10. The machine of claim 7, wherein the peeling blade member includes height varying bodies arranged between the peeling blade body and the blades to vary relative heights of the blades with respect to the peeling blade body.
